# NEW EUROPEAN PATENT SPECIFICATION

(11) **EP 0 882 164 B2**
(45) Date of publication and mention of the opposition decision: **02.01.2003**
(45) Mention of the grant of the patent: 22.03.2000
(21) Application number: 96942518.0
(22) Date of filing: 19.12.1996
(51) Int. Cl.: E04B 1/41, F16B 37/04

(54) **CHANNEL ASSEMBLY**
ANKERSCHIENENANORDNUNG
ASSEMBLAGE DE PROFILE

(30) Priority: 19.12.1995 GB 9525880
(43) Date of publication of application: 09.12.1998
(73) Proprietor: Ancon CCL Limited, Sheffield S4 7UR (GB)
(72) Inventor: CHIPPENDALE, Aiden, Mark, Thomas, Castleton Derbyshire S30 2WS (GB)
(74) Representative: Pacitti, Paolo
(86) International application number: GB9603168
(87) International publication number: WO97022764

(56) References cited:
- DE-A- 3 531 998
- DE-A- 4 244 395
- DE-A- 4 306 877
- DE-U- 9 115 943
- FR-A- 1 603 501
- GB-A- 231 702
- GB-A- 782 428
- FRIMEDA ANCHOR CHANNELS AND SECTIONS FRIMEDA ANCHOR CHANNELS AND SECTIONS

## Description

This invention relates to a channel assembly which is adapted to be cast into or otherwise attached to a building structure.

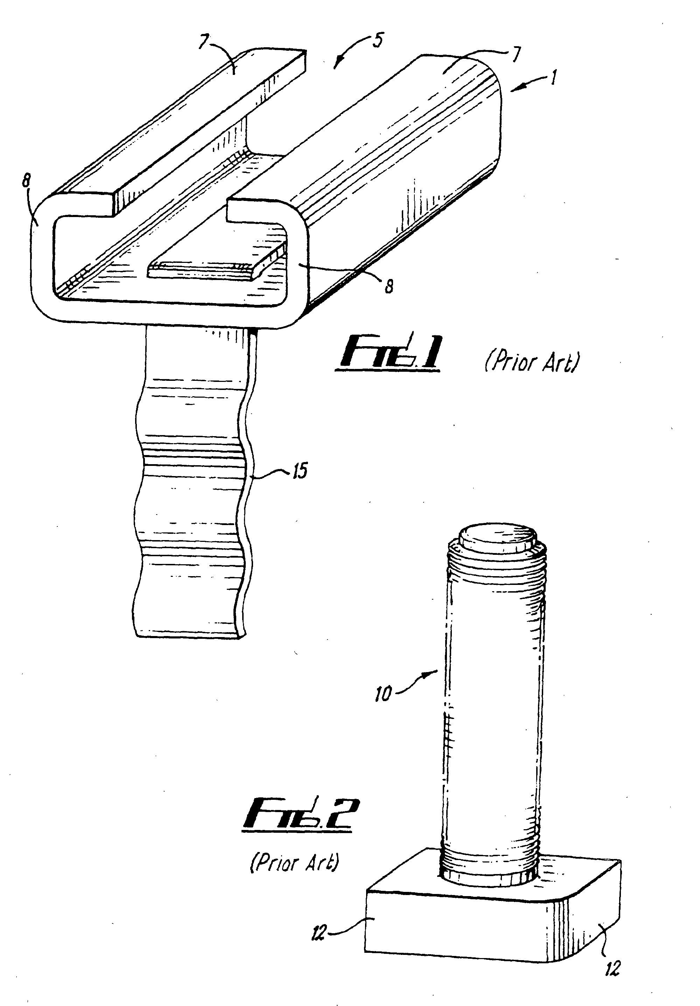

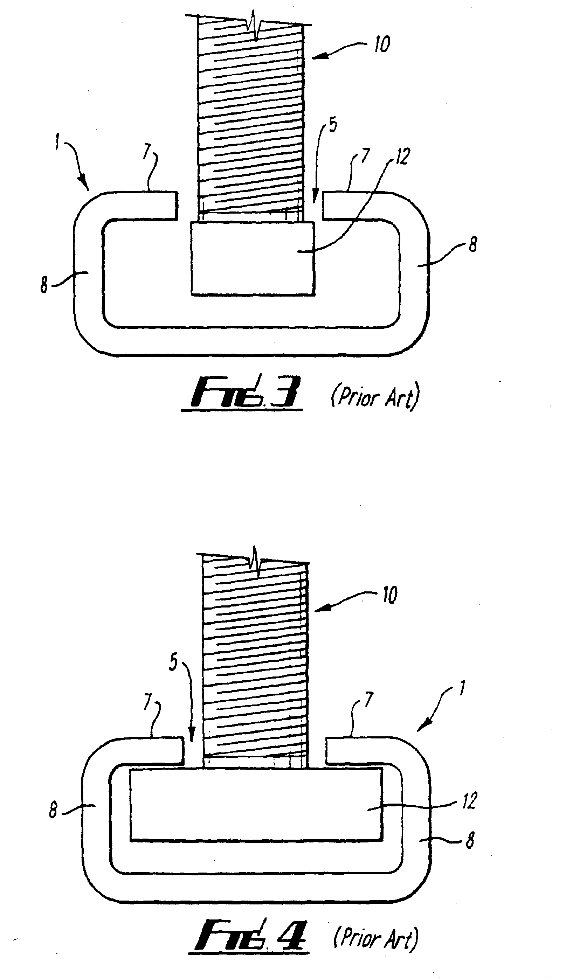

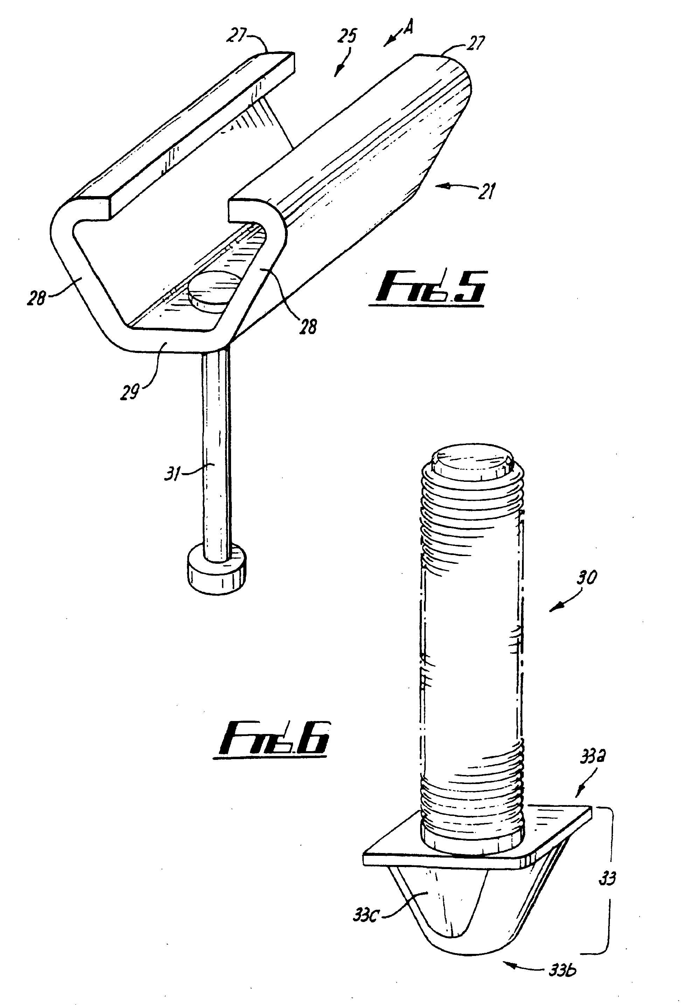

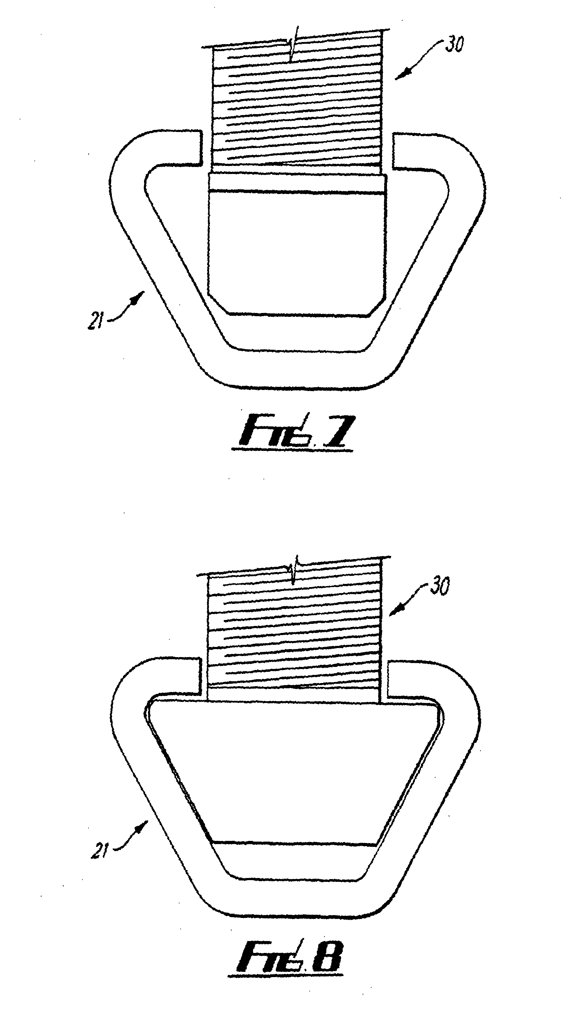

Channel assemblies such as that shown in Figs. 1-4 have been used for many years for fixing ancillary components such as masonry support angles to a building structure. A channel can be mounted on the surface of the structure by bolting or can be cast into a concrete face. Conventional channels 1 generally have a rectangular-shaped cross-section with an open slot 5 between two lips 7 which are turned inwards from generally parallel side walls 8. The slot extends along the length of the channel 1.

The channel 1 is used in conjunction with a bolt 10 with a generally T-shaped head having two wings 12. The bolt head fits into the open slot 5 in the channel 1 and is turned through 90° in a clockwise direction which locks the bolt 10 in position (the tips 12a of the wings 12 abut against the side walls 8 to prevent further rotation of the head). Conventionally, the fit of the head in the channel 1 is fairly loose. This can allow significant movement of the bolt 10 in the channel 1 under shear loads. Under tensile load the lips 7 of the channel 1 can deflect outwards and the wings 12 of the bolt 10 bend because the load is transferred from the head of the bolt 10 to the lips 7 of the channel 1 at a location remote from the sides 8 of the channel 1.

Under tensile load, the channel 1 behaves as a beam between the bolts securing the channel 1 to the structure or between anchorage lugs 15 which secure the channel 1 in the concrete.

GB 782, 428 describes an assembly in accordance with the pre-characterizing portion of claim 1 having a spine with a channel therein, inclined sides and a fixing element insertable in the channel.

According to the present invention there is provided a channel assembly in accordance with claim 1.

The sides of the head (or a portion thereof) are preferably inclined at substantially the same angle as the side walls of the channel.

The fixing and channel preferably co-operate (preferably by a cam action) to force the fixing against the means for restraining it upon rotation of the fixing in the channel.

Thus the invention also provides a method of securing a fixing in a channel assembly as defined above, the method comprising providing a channel assembly as defined above, locating the fixing in the channel, and rotating the fixing in the channel to engage the sides of the head and the side walls of the channel such that a camming action forces the head of the fixing against the lips of the channel.

The invention also provides a fixing for use in the channel assembly as defined above.

The head of the fixing is of an elliptical cone. In the embodiment comprising an elliptical cone, the rotation of the head in the channel optionally forces the sides of the head at its largest radius against the side walls of the channel, and can also force the head against the lips of the channel. This can reduce the extent of play of the fixing in the channel, and allow a stronger fixing than if the bolt is movable in the channel.

The restraining means can comprise lips defining a slot in the channel.

Optionally, the head can be generally T-shaped in end view such that it can pass through a slot in the channel and upon rotation can be restrained by the lips defining the slot (and/or the side walls of the channel).

Embodiments of the present invention will now be described with reference to the accompanying drawings in which:
Fig. 1 is a perspective view of a prior art channel; Fig. 2 is a perspective view of a prior art bolt for use in the channel of Fig. 1;
Fig. 3 is a cross-sectional view through the Fig. 1 channel showing the Fig. 2 bolt in longitudinal section;
Fig. 4 is a cross-sectional view similar to Fig. 3 showing the Fig. 2 bolt in longitudinal section but rotated through 90°;
Fig. 5 is a perspective view of a channel according to the invention;
Fig. 6 is a perspective view of a fixing for use with the channel of Fig. 5;
Fig. 7 is a cross-sectional view through the Fig. 5 channel showing the Fig. 6 fixing in longitudinal section;
Fig. 8 is a cross-sectional view similar to Fig. 7 showing the Fig. 6 fixing rotated through 90°;
Fig. 9 is a cross-sectional view of the channel of the invention (b) and the prior art channel (a) of Figs. 3 and 4 showing the relative deflection under load of each of the channels;
Fig. 10 is a side view of the head of a second fixing for use in the invention;
Fig. 11 is a top view of the Fig. 10 fixing;
Fig. 12 is a perspective view of a head of a third fixing; and
Fig. 13 is a plan view of the Fig. 12 head.

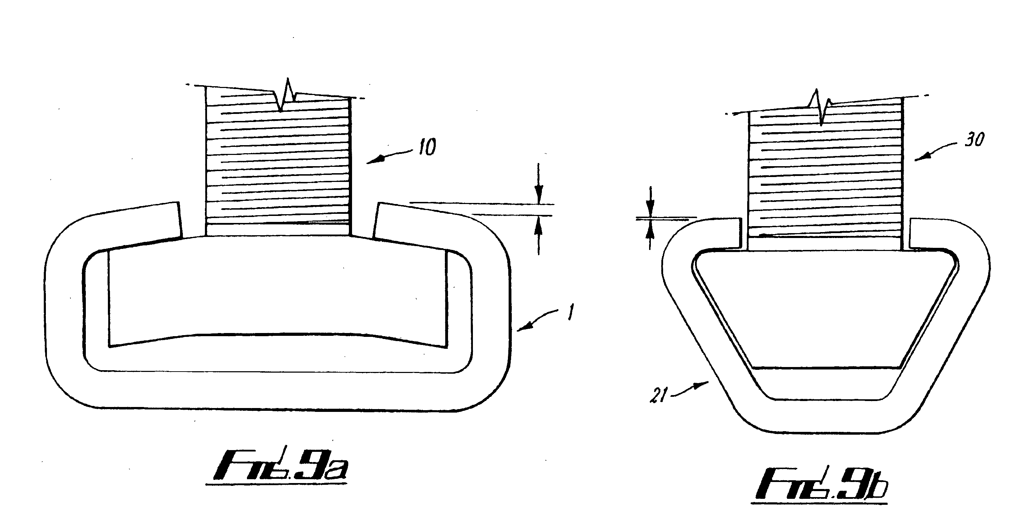

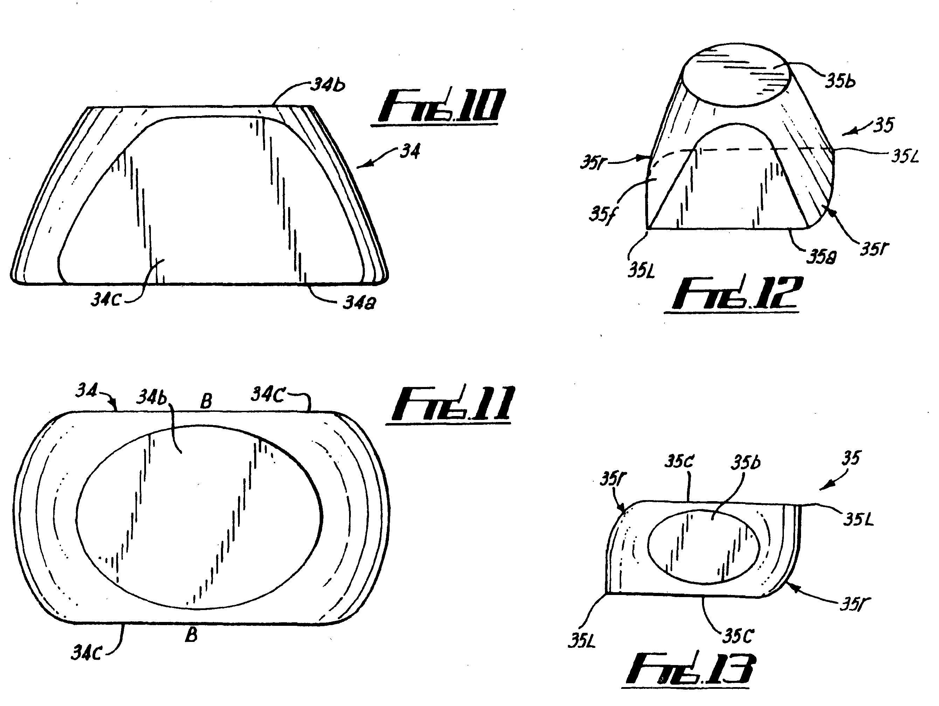

Referring now to Figs. 5 to 8, a channel assembly according to the invention 21 has a slot 25 bordered by two lips 27 which extend inwardly from two inclined sides 28. The sides 28 incline inwardly towards a spine 29, which has apertures (not shown) for anchors such as bolts 31. Alternatively the anchors could comprise lugs 15 as shown in Fig. 1.

The channel 21 is designed to be used with a fixing such as a bolt 30. The head 33 of the bolt 30 has a generally frusto-conical shape in side view. The sides of the head 33 taper from the base 33a to the tip 33b.

The angle of the tapered sides of the head 33 at its widest point approximately equals the angle of inclination of the sides 28 of the channel 21. At the base 33a of the head 33 there is a plate which is similar in plan view to the head of the prior art bolt 10. The head 33 has two flattened areas 33c on opposing sides to enable the head 33 to be inserted into the slot 25. Once in the slot 25, the head 33 can be turned clockwise through 90° but the plate prevents further rotation in the channel as described for the prior art.

Rotation of the head 33 in the channel 21 induces a camming effect between the head 33 and the channel 21 which forces the base 33a of the head 33 against the inner surfaces of the lips 27. This not only ensures that the rotated bolt 30 is restricted in its axial movement by the lips 27, but also transfers any axial load from the bolt to the channel 21 at the comers between the lips 27 and the side walls 28.

The plate at the base 33a of the head 33 is not in fact required and Figs. 10 and 11 show a modified head 34 which is in the form of a truncated elliptical cone. The cross-section through the head 34 is generally elliptical as shown in Fig. 11. The head 34 has flattened areas 34c as previously described for the head 33 which allows the head 34 to fit into the slot 25 of the channel 21. Upon rotation of the head 34 in the channel 21, the head 34 is forced upwards in the channel towards the slot 25 by the camming action of the inclined sides of the head 34 and channel 21 respectively, and the base 34a of the head 34 is firmly locked against the inner surface of the lips 27.

Figs. 12 and 13 show a variant of the truncated elliptical cone of Figs. 10 and 11. In Figs. 12 and 13, a head 35 is shown for a third fixing such as a bolt for use in the channel 21 of the invention. However, whereas the head 34 is generally symmetrical about a line B-B joining the mid points of its flattened areas 34c so that the vertices between the curved and flat portions are generally rounded, the head 35 has two diametrically opposed rounded comers 35r and two diametrically opposed right angled comers 35L at its base 35a. The head 35 is shaped such that the sides incline smoothly from the base 35a to the tip 35b. As previously described, the head 35 has flattened areas 35c on opposing sides.

When fitted to the shank of a bolt, the head 35 can fit into the slot 25 of the channel 21 as previously described. Upon clockwise rotation of the head 35 in the slot 25, the sides 28 of the channel 21 contact diametrically opposed sides of the head 35, such that the head 35 can be turned when the rounded sides 35r are in contact with the sides 28 of the channel 21, but once the corners 35L of the head 35-are in contact with the sides 28 of the channel 21, further rotation is resisted by the generally flat sides 35F adjacent the respective corners 35L. The surface area of the head 35 available to abut against the side walls 28 of the channel 21 is increased as compared to the surface area available on the bolt 30; this improves resistance to further rotation, and increases the camming force which drives the base 35a against the lips 27 when the head 35 is rotated in the channel 21.

The channel assembly of the invention has two distinct advantages - higher load capacity within a given deflection limit, and lower metal volume for a given overall performance.

The fit of the bolt in the channel transfers load to the channel at a location very close to the side walls and this can significantly reduce the deflection caused by bending of the lips of the channel under tensile load. The bolt head is more robust than the traditional T-head bolt while containing less metal, does not bend as readily under load and therefore also contributes to the reduction in deflection under load. Deflection is further reduced by the inclined sides of the channel transferring the load more directly to the anchorages than is the case with the traditional rectangular section. The inclined sides of the channel allow for a deeper cross-section for a given size of channel, which resists deflection of the channel when acting as a beam.

The inclined sides of the channel also minimise the amount of metal required to form the section - for a given strength in beam action, a channel having the new shape requires less metal than the traditional rectangular channel. The lips of the channel can be shorter than the lips of the traditional channel and this also contributes to the lower quantity of metal. The effect of this metal reduction is to give a more cost-effective channel for a given performance.

## Claims

1. A channel assembly (21) adapted to be attached to a building structure, said channel comprising a spine (29), two side walls (28) and lips (27) defining a slot (25) in the channel and adapted to restrain aflxing in the channel, said spine (29) being provided with anchors (31) for casting into concrete, said side walls (28) being inclined inwardly towards the spine (29) and further including a fixing (30) having a head (33) with inclined sides **characterised in that** the head (33) has a generally elliptical cone shape.

2. A channel assembly as claimed in Claim 1, wherein at least a portion of the sides of the head (33) are inclined at substantially the same angle as the side walls (28) of the channel.

3. A channel assembly as claimed in Claim 1 or 2, wherein the head (33) of the fixing is shaped such that the head (33) is forced against the lips (27) of the channel upon rotation of the fixing (30) in the channel.

4. A channel assembly as claimed in Claims 2 or 3 wherein the head (33) has flattened portions (33C) on its sides to allow access of the head through the channel slot (25).

5. A channel assembly as claimed in any one of Claims 2 to 4, wherein the head (33) of the fixing has flattened areas (35F) thereon to resist further rotation in the channel.

6. A method of securing a fixing in a channel assembly according to Claim 1, the method comprising providing a channel assembly according to any one of Claims 1 to 5, locating the fixing (30) in the channel (21), and rotating the fixing in the channel to engage the sides of the head (33) and the side walls (28) of the channel such that a camming action forces the head (33) of the fixing against the lips (27) of the channel.

7. A fixing for use in the assembly of Claim 1, wherein the fixing (30) has a head (33) which has a generally elliptical cone-shape.

8. A fixing as claimed in Claim 7, wherein the cone-shape is a truncated cone-shape.

9. A fixing as claimed in Claim 7 or 8, wherein the angle of inclination of the sides of the head (33) varies at different points on the radius of the head.

10. A fixing as claimed in any one of Claims 7 to 9, wherein the head (33) has flattened portions (33C) on its sides to allow access of the head through a channel slot (25).

11. A fixing as claimed in any one of Claims 7 to 10, wherein the head (33) of the fixing has flattened areas (35F) thereon to resist further rotation in the channel (21).

12. A fixing as claimed in any one of claims 7 to 11, wherein the head (33) has two diametrically opposed rounded corners (35r) and two diametrically opposed right angled corners (35L) at its base (35a).

13. A fixing as claimed in any one of Claims 7 to 12, wherein the sides of the head incline smoothly from the base to the tip.

## Patentansprüche

1. Eine Rinnenanordnung (21), die ausgeführt ist, um an einer Gebäudestruktur befestigt zu werden, wobei die Rinne aus einem Rücken (29), zwei Seitenwänden (28) und Lippen (27), die einen Schlitz (25) in der Rinne definieren und ausgeführt sind, um eine Fixierung in der Rinne zu halten, besteht, wobei der Rücken (29) mit Ankern (31) zum Gießen in Beton versehen ist, wobei die Seitenwände (28) nach innen in Richtung des Rückens (29) geneigt sind und weiterhin eine Fixierung (30) mit einem Kopf (33) mit geneigten Seiten einschließen, **dadurch gekennzeichnet, dass** der Kopf (33) im Allgemeinen eine elliptische Kegelform aufweist.

2. Rinnenanordnung gemäß Anspruch 1, wobei zumindest ein Abschnitt der Seiten des Kopfes (33) in im Wesentlichen demselben Winkel geneigt sind wie die Seitenwände (28) der Rinne.

3. Rinnenanordnung gemäß Anspruch 1 oder 2, wobei der Kopf (33) der Fixierung so geformt ist, dass der Kopf (33) bei Drehung der Fixierung (30) in der Rinne gegen die Lippen (27) der Rinne gedrückt wird.

4. Rinnenanordnung gemäß Ansprüchen 2 oder 3, wobei der Kopf (33) abgeflachte Abschnitte (33C) auf seinen Seiten aufweist, um den Zugang des Kopfes durch den Rinnenschlitz (25) zu erlauben.

5. Rinnenanordnung gemäß einem der Ansprüche 2 bis 4, wobei der Kopf (33) der Fixierung abgeflachte Bereiche (35F) darauf aufweist, um weiterer Drehung in der Rinne zu widerstehen.

6. Ein Verfahren zum Sichern einer Fixierung in einer Rinnenanordnung gemäß Anspruch 1, wobei das Verfahren aus dem Bereitstellen einer Rinnenanordnung gemäß einem der Ansprüche 1 bis 5, dem Anbringen der Fixierung (30) in der Rinne (21) und dem Drehen der Fixierung in der Rinne, um die Seiten des Kopfes (33) und die Seitenwände (28) der Rinne so in Eingriff zu bringen, dass eine Drehkeilbewegung den Kopf (33) der Fixierung gegen die Lippen (27) der Rinne drückt, besteht.

7. Eine Fixierung zur Verwendung in der Anordnung aus Anspruch 1, wobei die Fixierung (30) einen Kopf (33) aufweist, der eine im Allgemeinen elliptische Kegelform aufweist.

8. Fixierung gemäß Anspruch 7, wobei die Kegelform eine Stumpfkegelform ist.

9. Fixierung gemäß Anspruch 7 oder 8, wobei der Neigungswinkel der Seiten des Kopfes (33) an verschiedenen Stellen auf dem Radius des Kopfes unterschiedlich ist.

10. Fixierung gemäß einem der Ansprüche 7 bis 9, wobei der Kopf (33) abgeflachte Abschnitte (33C) auf seinen Seiten aufweist, um Zugang des Kopfes durch einen Rinnenschlitz (25) zu erlauben.

11. Fixierung gemäß einem der Ansprüche 7 bis 10, wobei der Kopf (33) der Fixierung abgeflachte Bereiche (35F) darauf aufweist, um weiterer Drehung in der Rinne (21) zu widerstehen.

12. Fixierung gemäß einem der Ansprüche 7 bis 11, wobei der Kopf (33) zwei einander diametral gegenüberliegende abgerundete Ecken (35r) und zwei einander diametral gegenüberliegende rechtwinklige Ecken (35L) an seiner Basis (35a) aufweist.

13. Fixierung gemäß einem der Ansprüche 7 bis 12, wobei die Seiten des Kopfes sich gleichmäßig von der Basis zu der Spitze neigen.

## Revendications

1. Un assemblage à gorge (21) adapté pour être attaché à une structure de bâtiment, ladite gorge comprenant un dos (29), deux parois latérales (28) et des lèvres (27) définissant une fente (25) dans la gorge et adaptées pour retenir une fixation dans la gorge, ledit dos (29) étant muni d'ancres (31) destinées à être coulées dans du béton, lesdites parois latérales (28) étant inclinées vers l'intérieur en direction du dos (29) et comportant de plus une fixation (30) possédant une tête (33) à côtés inclinés **caractérisé en ce que** la tête (33) a une configuration en cône généralement elliptique.

2. Un assemblage à gorge tel que revendiqué dans la revendication 1, dans lequel au moins une portion des côtés de la tête (33) est inclinée à sensiblement le même angle que les parois latérales (28) de la gorge.

3. Un assemblage à gorge tel que revendiqué dans les revendications 1 ou 2, dans lequel la tête (33) de la fixation est configurée de telle sorte que la tête (33) soit forcée contre les lèvres (27) de la gorge lors de la rotation de la fixation (30) dans la gorge.

4. Un assemblage à gorge tel que revendiqué dans les revendications 2 ou 3 dans lequel la tête (33) présente sur ses côtés des portions aplaties (33C) afin de permettre à la tête de traverser la fente (25) de la gorge.

5. Un assemblage à gorge tel que revendiqué dans n'importe laquelle des revendications 2 à 4, dans lequel des zones aplaties (35F) sont situées sur la tête (33) de la fixation afin de s'opposer à la rotation plus avant dans la gorge.

6. Un procédé d'assujettissement d'une fixation dans un assemblage à gorge selon la revendication 1, le procédé consistant à fournir un assemblage à gorge selon n'importe laquelle des revendications 1 à 5, à positionner la fixation (30) dans la gorge (21) et à faire tourner la fixation dans la gorge pour mettre en prise les côtés de la tête (33) et les parois latérales (28) de la gorge de telle sorte qu'une action de came force la tête (33) de la fixation contre les lèvres (27) de la gorge.

7. Une fixation destinée à être utilisée dans l'assemblage de la revendication 1, dans laquelle la fixation (30) possède une tête (33), laquelle a une configuration en cône généralement elliptique.

8. Une fixation telle que revendiquée dans la revendication 7, dans laquelle la configuration en cône est une configuration en cône tronqué.

9. Une fixation telle que revendiquée dans les revendications 7 ou 8, dans laquelle l'angle d'inclinaison des côtés de la tête (33) varie au niveau de différents points sur le rayon de la tête.

10. Une fixation telle que revendiquée dans n'importe laquelle des revendications 7 à 9, dans laquelle la tête (33) présente sur ses côtés des portions aplaties (33C) afin de permettre à la tête de traverser une fente (25) de la gorge.

11. Une fixation telle que revendiquée dans n'importe laquelle des revendications 7 à 10, dans laquelle des zones aplaties (35F) sont situées sur la tête (33) de la fixation afin de s'opposer à la rotation plus avant dans la gorge (21).

12. Une fixation telle que revendiquée dans n'importe laquelle des revendications 7 à 11, dans laquelle la tête (33) présente à sa base (35a) deux coins arrondis diamétralement opposés (35r) et deux coins à angle droit diamétralement opposés (35L).

13. Une fixation telle que revendiquée dans n'importe laquelle des revendications 7 à 12, dans laquelle les côtés de la tête s'inclinent en douceur depuis la base jusqu'au bout.
